## Europäisches Patentamt

## European Patent Office

## Office européen des brevets

(11) Veröffentlichungsnummer: **0 210 438**
**B1**

(12) **EUROPÄISCHE PATENTSCHRIFT**

(45) Veröffentlichungstag der Patentschrift:
03.05.89

(21) Anmeldenummer: **86108658.5**

(22) Anmeldetag: **25.06.86**

(51) Int. Cl.⁴: **B 65 G 1/137**, G 08 B 5/36,
F 21 Q 3/00, G 05 B 15/00

(54) **Vorrichtung zum beleglosen Kommissionieren von Waren.**

(30) Priorität: **26.07.85 DE 3526868**

(43) Veröffentlichungstag der Anmeldung:
**04.02.87 Patentblatt 87/6**

(45) Bekanntmachung des Hinweises auf die Patenterteilung:
**03.05.89 Patentblatt 89/18**

(84) Benannte Vertragsstaaten:
**AT BE CH DE FR GB IT LI LU NL**

(56) Entgegenhaltungen:
AT-A- 362 687
DE-A- 1 441 502
DE-B- 2 337 889
US-A- 3 261 011
US-A- 3 310 797
US-A- 3 803 578
US-A- 3 921 160
US-A- 4 234 869

WERNER SCHRAMM "Lager und Speicher für Stück-
und Schüttgüter, Flüssigkeiten und Gase" Handbuch
für Planung, Bau und Ausrüstung, 1. Auflage 1965,
Bauverlag Gmbh Wiesbaden - Berlin, Seiten 20-21

(73) Patentinhaber: **Interroll Fördertechnik GmbH & Co. KG,
Postfach, D-5632 Wermelskirchen 2 (DE)**

(72) Erfinder: **Specht, Dieter, Neuenweg 61,
D-5632 Wermelskirchen 3 (DE)**

(74) Vertreter: **Patentanwälte Müller-Boré, Deufel, Schön,
Hertel, Lewald, Otto, Postfach 26 02 47 Isartorplatz 6,
D-8000 München 26 (DE)**

## Beschreibung

Die Erfindung betrifft eine Vorrichtung, um einer Lagereinrichtung zum beleglosen Kommissionieren von Warenvorräten die von einem über einen Rechner gesteuerten Mengenanzeiger angezeigte Warenmenge zu entnehmen und in einen Transportbehälter einzubringen, wobei über eine Quittungstaste die angezeigte Menge gelöscht wird.

Beleglose oder papierlose Kommissionierung ist insbesondere im Pharmagroßhandel, im Buch- und Schallplattenversand sowie in Versandhäusern, Elektronikbetrieben und Tiefkühlhäusern vorteilhaft und wird dort verstärkt angewendet. Die Person, die einen Auftrag zusammenstellt, d.h. die die verschiedenen geordneten Waren zusammenträgt, damit sie dem Besteller zugeführt werden können, hat keinen Beleg in der Hand, von welchem sie die Waren und die Menge der Waren abliest, sondern an geeigneten Stellen der Lagevorrichtung wird über einen Rechner gesteuert angezeigt, welche Ware und wieviel Stück dieser Ware zu entnehmen und in einen Sammelbehälter einzulegen ist. Bei großflächigen Lagern müssen dabei eventuell lange Wege gegangen werden.

Der Erfindung liegt die Aufgabe zugrunde, eine Vorrichtung zu schaffen, durch welche die von den Kommissionierern zurückzulegenden Wege reduziert werden.

Diese Aufgabe wird erfindungsgemäss dadurch gelöst, daß über den Rechner gesteuerte Lichtsignale an der Lagereinrichtung vorgesehen sind zur Anzeige der anschließend an den Quittungsvorgang als nächstes zu bearbeitenden Ware.

Neben der Angabe der Nummer des Behälters, in welchen die Waren eingelegt werden müssen, wenn ein Kommissionierer gleichzeitig mehrere Aufträge abarbeitet, sowie der Angabe der Anzahl der Waren, die aus dem Vorrat zu entnehmen sind, wird über geeignete Lichtsignale dem Kommissionierer angezeigt, in welcher Reihenfolge er den Auftrag abarbeiten muß, damit die dabei zwischen den Regalen zurückzulegenden Wege minimiert werden. Dies kann gemäß bevorzugten Ausführungsformen über Lichtsignale in Form von beleuchteten Pfeilen oder in Form von Blinklichtern erfolgen. Beispielsweise kann durch Aufblinken eines grünen Pfeiles dem Kommissionierer angezeigt werden, ob er die Seite eines Kommissionierganges wechseln soll, d.h. ob er von der einen Regalseite auf die andere Regalseite zu gehen hat, um die nächstgelegene Ware zu entnehmen und in den Transportbehälter einzulegen, oder ob er auf derselben Regalseite in der angezeigten Richtung weitergehen muß.

Wenn die Regale in dem Lager in Stichgängen angeordnet sind, kann am Zugang jedes Stichganges angezeigt werden, ob eine Ware aus einem Warenvorrat innerhalb dieses Stichganges zu entnehmen ist oder nicht. Dadurch ist der Kommissionierer nicht gezwungen, in jeden Stichgang zu gehen, um zu überprüfen, ob von einer Ware aus einem dort angeordneten Regal eine bestimmte Stückzahl zu entnehmen ist.

Um zu ermöglichen, daß Aufträge sehr schnell ausgeführt werden oder daß mehrere Kommisssionierer in einem Abschnitt gleichzeitig tätig werden können, ist in Ausgestaltung der Erfindung vorgesehen, daß für verschiedene Kommissionierer neben den Mengenanzeigen unterschiedliche Lichtsignale zur Führung der Kommissionierer vorgesehen sind. Damit kann beispielsweise ein Kommissionierer über grüne Lichtpfeile und ein anderer Kommissionierer über Lichtpfeile in einer anderen Farbe gesteuert werden.

Ausführungsbeispiele der Erfindung werden nachstehend anhand der Zeichnung näher erläutert. Es zeigt:

Fig. 1 in Vorderansicht einen Abschnitt einer Vorrichtung zum beleglosen Kommissionieren,

Fig. 2 in schematischer Darstellung ein Fließlager mit Regalen beiderseits eines Kommissionierganges und

Fig. 3 in schematischer Darstellung ein gemischtes Lager mit Stichgängen.

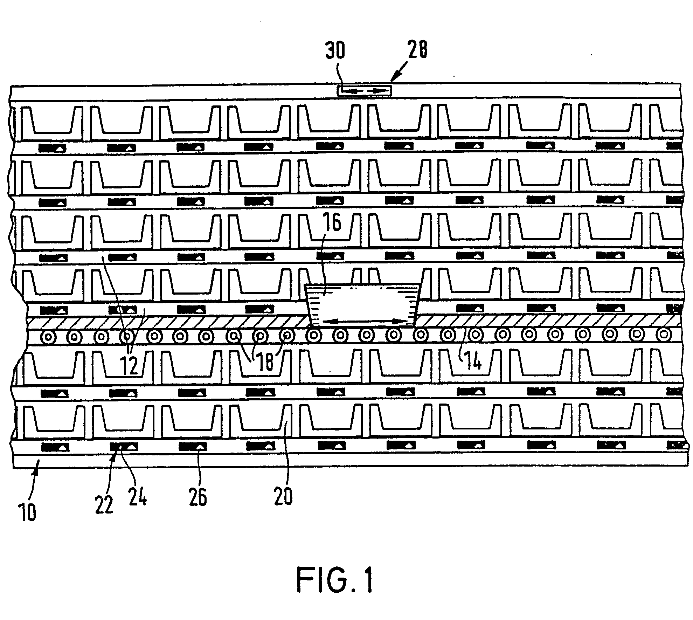

Fig. 1 zeigt einen Abschnitt einer Vorrichtung zum beleglosen Kommissionieren mit einer Lagereinrichtung 10 in Form eines Regals mit übereinander angeordneten Regalböden 12. Vor dem Regal ist eine Förderstrecke 14 vorgesehen, auf welcher Transportbehälter 16 über Rollen 18 verschiebbar sind. Auf jedem der Regalböden 12 sind Warenbehälter 20 abgestellt, in welchen die zu kommissionierenden Waren gelagert sind. Unter jedem Behälter ist an der Vorderseite der Regalböden 12 jeweils eine Mengenanzeige 22 angeordnet. Jede Mengenanzeige 22 besteht aus einer Digitalleuchtanzeige 24 und einem Schalter 26, mit welchem quittiert wird, wenn die durch die Leuchtanzeige 24 angegebene Warenmenge aus einem Behälter 20 entnommen und in den Transportbehälter 16 übergeben worden ist. Nach Betätigung des Schalters 26 erlischt die Leuchtanzeige 24, und in einer mit den Mengenanzeigen 22 verbundenen Recheneinheit wird registriert, daß der Posten des Auftrags abgearbeitet ist, und gleichzeitig wird die aus dem Behälter 20 entnommene Ware von der vorher in dem Behälter 20 enthaltenen Warenmenge abgezogen, so daß ständig die noch in der Lagereinrichtung 10 enthaltenen Waren abrufbar sind.

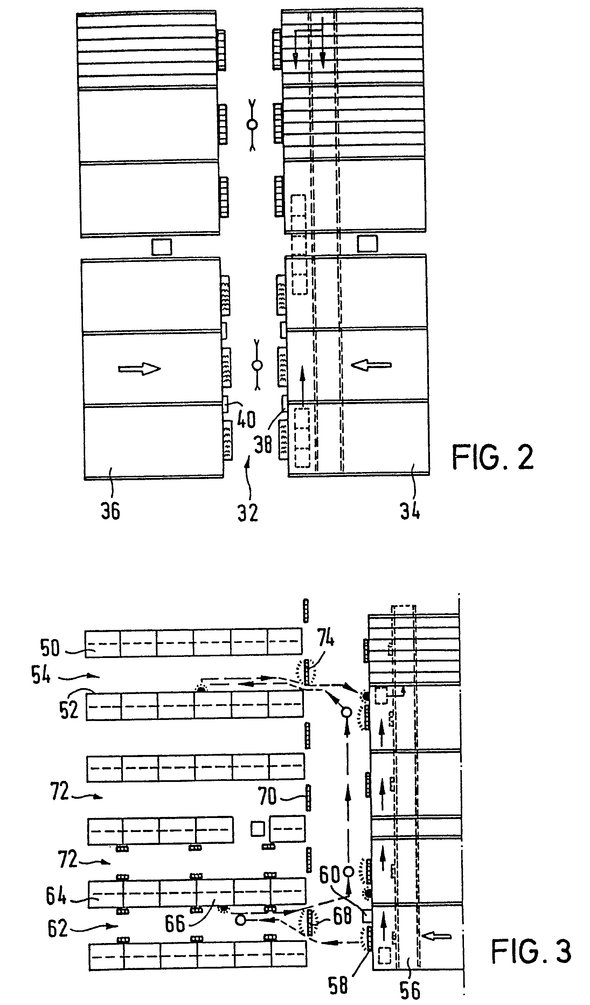

Um den Kommissionierer dabei zu unterstützen, die zum Abarbeiten des Auftrags zurückzulegenden Wege zu minimieren, sind an geeigneter Stelle an der Regalanlage Anzeigen 28 vorgesehen, auf welchen beispielsweise über aufleuchtende grüne Pfeile 30 angegeben wird, in welcher Richtung der Kommissionierer gehen muß, um von einem nächsten Behälter die erforderliche Warenmenge aus dem Regal zu nehmen und in den Transportbehälter 16 zu übergeben. Wenn, wie in Fig. 2 gezeigt, beiderseits eines Kommissionierganges 32 Regalanlagen 34 und 36 gegenüberliegen, so sind an der Stirnseite jeder Regalanlage 34 und 36 Anzeigen 38 bzw. 40 vorgesehen, über welche dem Kommissionierer mitgestellt wird, ob er von der einen Seite des Kommissionierganges auf die andere wechseln muß, um auf kürzestem Wege die nächste Ware zu entnehmen, oder ob er auf derselben Gangseite weiter- oder zurückgehen muß, um den nächsten Posten des Auftrags zu erledigen. Die Anzeigen 38 und 40 können dabei ebenfalls in Form von Pfeilen, die für die Angabe zum Wechseln der Seite beispielsweise nach unten gerichtet sind, und in Form von Pfeilen in Horizontalrichtung für die Angabe des Weitergehens oder des Zurückgehens ausgeführt sein. Ebenfalls ist es möglich, diese Leuchtanzeigen durch Blinklichter auszubilden.

Fig. 3 zeigt ein Lager, bei welchem Regale 50, 52 in Stichgängen 54 angeordnet sind. Wenn der Kommissionierer an einem Regal 56 beginnt, Waren zu entnehmen, die über die Anzeige 58 angezeigt werden, wird ihm über eine Anzeige 60 mitgeteilt, daß er in einen Stickgang 62 gehen muß, um aus einem Regal 64 von einem Regalabschnitt 66 Ware zu entnehmen. Über ein Hinweis-Lichtsignal 68 wird dem Kommissionierer angezeigt, daß er den Stichgang 62 betreten muß. Entsprechende Hinweis-Lichtsignale 70 vor Stichgängen 72 sind dagegen nicht aktiv, so daß der Kommissionierer weiß, daß er in diesen Stichgang nicht hineingehen muß. Erst durch das Aufleuchten des Hinweis-Lichtsignals 74 vor dem Stichgang 54 weiß der Kommissionierer, daß er eine Ware aus dem Regal 52 entnehmen muß.

Wenn mehrere Kommissionierer gleichzeitig an einem oder an verschiedenen Aufträgen in dem Lagerabschnitt arbeiten sollen, kann über verschiedenfarbige Leuchtanzeigen dem einzelnen Kommissionierer mitgeteilt werden, in welcher Reihenfolge er einen Teil oder den Gesamtauftrag abzuarbeiten hat. Mit Hilfe der gezielten Steuerung können die Wege der Kommissionierer reduziert werden, was zum einen dazu beiträgt, die Geschwindigkeit des Kommissionierens zu erhöhen, und zum anderen können die Kommissionierer selbst entlastet werden.

## Patentansprüche

1. Vorrichtung, um einer Lagereinrichtung (10) zum beleglosen Kommissionieren von Warenvorräten die von einem über einen Rechner gesteuerten Mengenanzeiger (22) angezeigte Warenmenge zu entnehmen und in einen Transportbehälter (16) einzubringen, wobei über eine Quittungstaste (26) die angezeigte Menge gelöscht wird, dadurch gekennzeichnet, daß über den Rechner gesteuerte Lichtsignale (28) an der Lagereinrichtung (10) vorgesehen sind zur Anzeige der anschließend an den Quittungsvorgang als nächstes zu bearbeitenden Ware.

2. Vorrichtung nach Anspruch 1, dadurch gekennzeichnet, daß die Lichtsignale (28) in Form von beleuchteten Pfeilen (30) oder Blinklichtern angeordnet sind.

3. Vorrichtung nach Anspruch 1 oder 2, dadurch gekennzeichnet, daß die Hinweis-Lichtsignale (68, 70, 74) am Zugang von Stichgängen (62, 72) angeordnet sind.

4. Vorrichtung nach einem der Ansprüche 1 bis 3, dadurch gekennzeichnet, daß ein Lichtsignal (38, 40) zum Anzeigen des Wechselns einer Seite eines Ganges in Form eines nach unten oder oben gerichteten Pfeiles angeordnet ist.

5. Vorrichtung nach einem der Ansprüche 1 bis 4, dadurch gekennzeichnet, daß zum gleichzeitigen Abarbeiten mehrerer Aufträge neben den Mengenanzeigern für die verschiedenen Kommissionierer unterschiedliche Lichtsignale angeordnet sind.

## Claims

1. Equipment for extracting from a storage system (10) a quantity of goods as shown by a computer-controlled indicator (22) and inserting them in a transport container (16), without the use of documents, when assembling an order, the quantity indicated being cancelled by a receipt contact (26), characterized in that light signals (28) controlled by the computer are provided on the storage system (10), showing the next goods to be handled after receipt has taken place.

2. Equipment in accordance with claim 1, characterized in that light signals (28) are provided in the form of illuminated arrows (30) or flashing lights.

3. Equipment in accordance with claim 1 or 2, characterized in that the indicating light signals (68, 70, 74) are situated at the entrances to access gangways (62, 72).

4. Equipment in accordance with one of claims 1 to 3, characterized in that a light signal (38, 40) indicating changeover between sides of a gangway is provided in the form of an arrow pointing downwards or upwards.

5. Equipment in accordance with one of claims 1 to 4, characterized in that to allow several orders to be assembled at the same time different light signals are provided for the different collectors in addition to the quantity indicators.

## Revendications

1. Dispositif pour, dans la préparation sans document de commandes de marchandises, prélever dans une installation de stockage (10) les quantités de marchandises affichées par un indicateur de quantité (22) commandé par ordinateur et les placer dans un conteneur (16), la quantité affichée étant effacée par l'intermédiaire d'une touche d'accusé de réception (26), caractérisé en ce que des signaux lumineux (28) commandés par l'intermédiaire de l'ordinateur sont prévus dans l'installation de stockage (10) pour indiquer aussitôt après le processus d'accusé de réception les marchandises à traiter ensuite.

2. Dispositif selon la revendication 1, caractérisé en ce que les signaux lumineux (28) sont réalisés sous la forme de flèches lumineuses (30) ou de lumière clignotantes.

3. Dispositif selon la revendication 1 ou 2, caractérisé en ce que les signaux avertisseurs lumineux (68, 70, 74) sont placés à l'entrée de travées successives (62, 72).

4. Dispositif selon l'une des revendications 1 à 3, caractérisé en ce qu'un signal lumineux (38, 40) est placé sous la forme d'une flèche dirigée vers le bas ou vers le haut pour l'indication d'un changement de côté dans une travée.

5. Dispositif selon l'une des revendications 1 à 4, caractérisé en ce que, pour le traitement simultané de plusieurs commandes, des signaux lumineux différents pour les différents préparateurs de commandes sont placés à côté des indicateurs de quantités.

FIG.1

FIG. 2

FIG. 3